Europäisches Patentamt

European Patent Office

Office européen des brevets

(19)

(11) Publication number: **0 300 830**
**A1**

## (12) EUROPEAN PATENT APPLICATION

(21) Application number: **88306807.4**

(22) Date of filing: **25.07.88**

(51) Int. Cl.⁴: **B 65 G 1/137**

(30) Priority: **24.07.87 US 77430**

(43) Date of publication of application:
**25.01.89 Bulletin 89/04**

(84) Designated Contracting States: **DE FR GB**

(71) Applicant: **RAPISTAN INCORPORATED**
**507, Plymouth, N.E. Grand Rapids, Michigan (US)**

(72) Inventor: **Hemond, Robert Francis**
**1411 Marwood, S.E.**
**Grand Rapids Michigan 49508 (US)**

(74) Representative: **Robinson, Anthony John Metcalf et al**
**Kilburn & Strode 30 John Street**
**London, WC1N 2DD (GB)**

(54) **Apparatus for paperless batch picking in split-case quantities.**

(57) A computerized storage and conveyor system facilitating the accurate and speedy retrieval of stored articles to fill relatively small orders having relatively low volumes and relatively high mix rates. The system includes a plurality of storage bins (32), a plurality of carriers (24) each having a plurality of compartments (56), and a system (22) for conveying the carriers (24) along a path by the storage bins. In response to the order information corresponding to each carrier compartment, a control system (90) controls display (36) associated with each storage bin and displays (62) associated with each carrier compartment to indicate the types and numbers of articles to be retrieved from the storage bin and placed in the carrier compartments.

FIG. 2

EP 0 300 830 A1

**Description**

## APPARATUS FOR PAPERLESS BATCH PICKING IN SPLIT-CASE QUANTITIES

The present invention relates to storage and retrieval systems, and more particularly to such systems having improved capabilities for enhancing the speed and accuracy at which articles can be retrieved from the storage system.

Warehousing systems have been developed for storing articles for subsequent retrieval and shipping. Typically, such systems include storage racks and a conveyor system traversing the storage racks for conveying totes or containers to be loaded with retrieved product. Human workers within the storage area retrieve articles from the storage racks and place the retrieved articles in the totes or containers for conveyance to a shipping area.

In one such system, totes are placed at the beginning end of the conveyor and have a paper packing list attached to each tote. As the totes traverse the storage area, the individual workers sequentially review the packing list to determine whether any of the items listed thereon are within their area of responsibility. If so, the worker retrieves the required items from the storage rack and places the retrieved items in the tote. After the tote has traversed the entire storage area, hopefully each worker has accurately read the packing list and accurately supplied its requirements. In reality, items are often overlooked, inaccurately selected, and/or selected in the wrong quantities. The cost of correcting such errors is rather high. Further, the error is usually detected by the recipient of the shipment who must return the item to the shipper with the associated frustration and paperwork. The noted selection or "picking" problems are further aggravated when the articles are retrieved in "split-case" quantities, meaning less than full-case lots.

In an attempt to overcome the above-noted problems, the Rapistan Corp. of Grand Rapids, Michigan, the present applicant, has previously developed a partially computerised system. The system included a belt conveyor for conveying the individual totes along the storage racks. The packing list for each tote was internally recorded in a central computer. The storage area was conceptually segmented into bays each including a plurality of slots each for a different product type. If the tote required materials stored in the bay, a system of lights and digital displays would provide the human order selector with information regarding the required quantity for product selection. Although this system works well for high-volume, high-activity, low-mix applications, it is not efficient for low-volume, low-activity, high-mix applications, such as a warehouse for drug stores or convenience stores. In such applications, the described system results in much idle worker time. Further, the system does not improve the pick error rate to the desired extent.

According to one aspect of the invention there is provided a system for assisting workers in accurately retrieving articles from a storage area to fill individual orders, the system comprising: storage means for storing the articles, the storage means including a plurality of storage areas each corresponding to a product type, a carrier including a plurality of carrier areas each corresponding to an order to be filled, and motive means for propelling the carrier through the storage means along a path proximate the storage areas, characterised by a storage area indicator means included in each storage area for indicating when articles within the storage area are to be retrieved; a carrier area indicator means included in each carrier area for indicating when articles are to be placed into the carrier area; memory means for storing a list of articles to be placed in each carrier area, and control means for controlling the storage area indicator means and the carrier area indicator means, said control means being responsive to said memory means and including monitor means for determining the relative location of the carrier with respect to the storage area, the control means including means for activating each storage area indicator means when the carrier is proximate the associated storage area and when product is required from the storage area by any one of the carrier areas, the control means further including means for activating said carrier area indicator means associated with each carrier area requiring product from the storage area, whereby a worker is alerted to the requirement of article transfer and to the origination and destination of the transfer.

According to a second aspect of the invention there is provided a computerized warehousing system comprising a storage area including a plurality of storage locations, and a carrier capable of travelling within the storage area, the carrier including a plurality of carrier cells, characterised by a storage location display associated with each storage location, a carrier cell display associated with each carrier cell, and control means for controlling activation of the storage location display and the carrier cell display, the control means including means for determining the relative position of said carrier with respect to said storage locations, the control means activating the storage location displays and the carrier cell displays as the carrier travels through the storage area to designate material transfer originations and destinations.

According to a third aspect of the invention there is provided a warehousing system comprising: a storage area including a plurality of bays, each of the bays including a plurality of bins for storing a product type, and a conveyor system traversing the storage area along a path, the conveyor system including a plurality of carriers each having a plurality of compartments each for receiving a tote, the conveyor system further including means for moving each vehicle along the path, characterised by computer means for controlling movement of the carriers and for indicating the number of products to be transferred from the storage bins to the carrier compartments, the computer means including:

memory means for storing a list of products to be loaded into each carrier compartment; location means for determining the location of each carrier with respect to the storage bays; control means for stopping each carrier proximate each bay having a bin from which product is required by any compartment within the carrier; first indicator means for indicating each storage bin from which product is required; second indicator means for indicating the carrier compartments requiring the product; and acknowledgement means for permitting a worker to signal that all required product from an indicated storage bin has been transferred to the indicated carrier compartments.

It will be understood that it is possible by means of the present invention to overcome the aforementioned problems by providing a paperless system for accurately and speedily retrieving warehouse items, especially in low-volume, low-activity, high-mix applications.

In a preferred embodiment, the control system includes a memory for storing a packing list of materials for each tote in each carrier. The storage area includes devices for reading identification information on the carriers. When the control system determines that any one or more of the carrier totes requires articles from one or more bins in a bay, the carrier is stopped; and lights on the storage bin and the carrier compartment from and to which the articles are to be transferred are illuminated to facilitate the worker's task. A numeric display is activated indicating the total number of items to be picked; and additional numeric displays indicate the number of those picked items to be distributed in each tote. After the worker acknowledges that the article transfer is complete, the above-described process repeats itself for any additional bins in the bay from which items are required. After all necessary items have been retrieved from the bay, the carrier proceeds to the next bay from which material is required.

The preferred system greatly facilitates article retrieval for order fulfilment. The inclusion of a plurality of totes on each carrier enables a plurality of orders to be filled substantially simultaneously as compared to the sequential handling of totes in the prior art. Further, the indicators associated with each product bin and each carrier compartment facilitate accurate retrieval and depositing of the transferred items. The worker can proceed directly to the indicated bin; retrieve the required number of articles; return to the carrier; and deposit the required numbers of articles in each compartment as indicated by the display associated with each compartment. Pick errors are therefore vastly reduced. No paper is necessary within the storage area.

The invention may be carried into practice in various ways but one storage and retrieval system embodying the invention will now be described by way of example with reference to the accompanying drawings in which:

Fig. 1 is a top plan view of the storage and retrieval system;

Fig. 2 is an elevational view taken along plane II-II in Fig. 1;

Fig. 3 is an elevational view of the storage bays;

Fig. 4 is an elevational view of the tote carrier;

Fig. 5 is a top plan view of the tote carrier;

Fig. 6 is an enlarged view of the carrier display indicating in part the total quantity to be picked;

Fig. 7 is an enlarged view of the carrier compartment display indicating in part the quantity to be distributed into the compartment;

Fig. 8 is a block diagram of the control system; and

Fig. 9 is a flow diagram illustrating the control of carrier movement and information display.

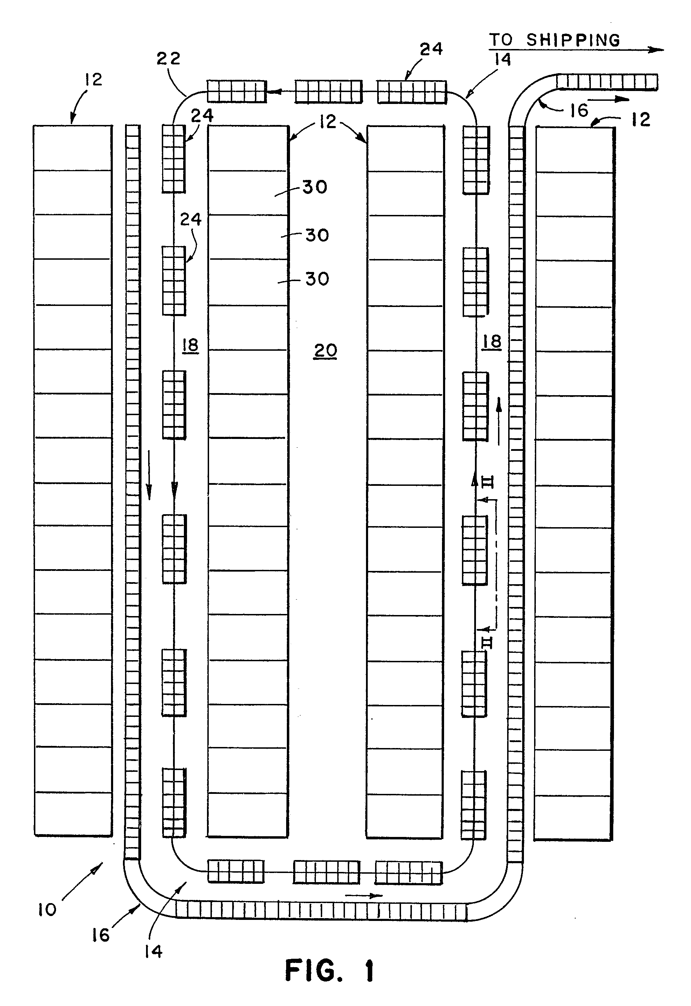

The system 10 is shown generally in Fig. 1 and includes a plurality of storage racks 12, a carrier conveyor system 14, and a return conveyor 16. The storage racks 12 are arranged to define retrieval or "pick" aisles 18 and replenishment aisles 20. The retrieval aisles 18 alternate with the replenishment aisles 20 so that each storage rack 12 has a retrieval side and a replenishment side. The carrier conveyor system 14 traverses the retrieval aisles 18 and includes an overhead beam 22 (defining a path) and a plurality of carriers 24 which are powered by and travel along the beam (to follow the path). The return conveyor 16 generally parallels the carrier conveyor 14 and provides a means whereby filled totes can be transported to a shipping area (not shown).

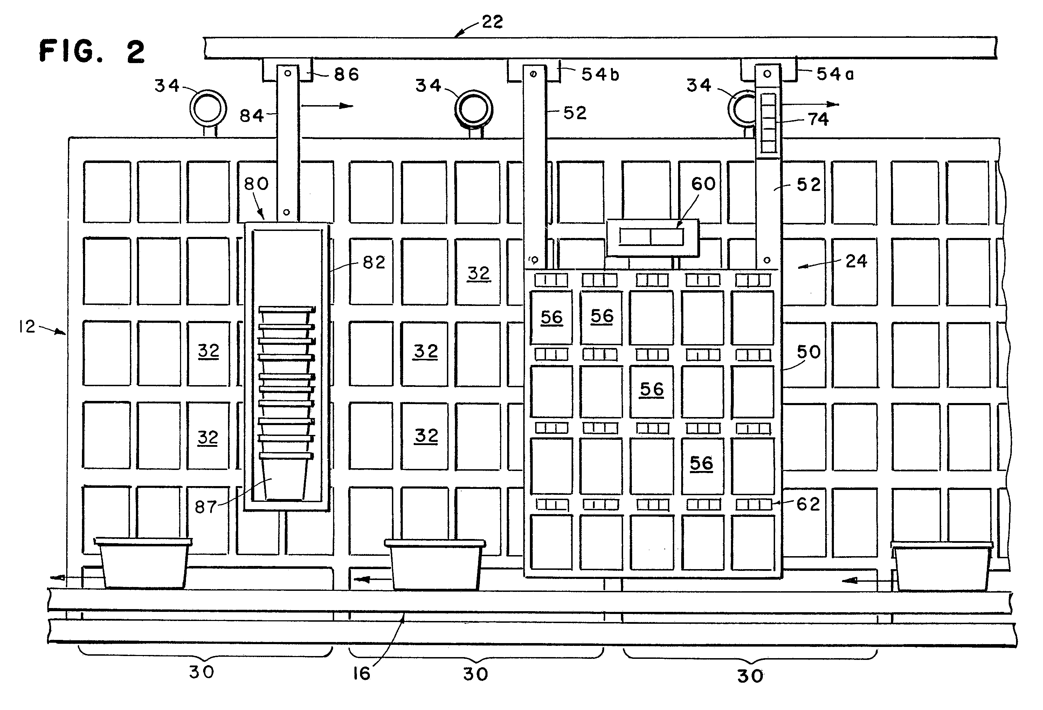

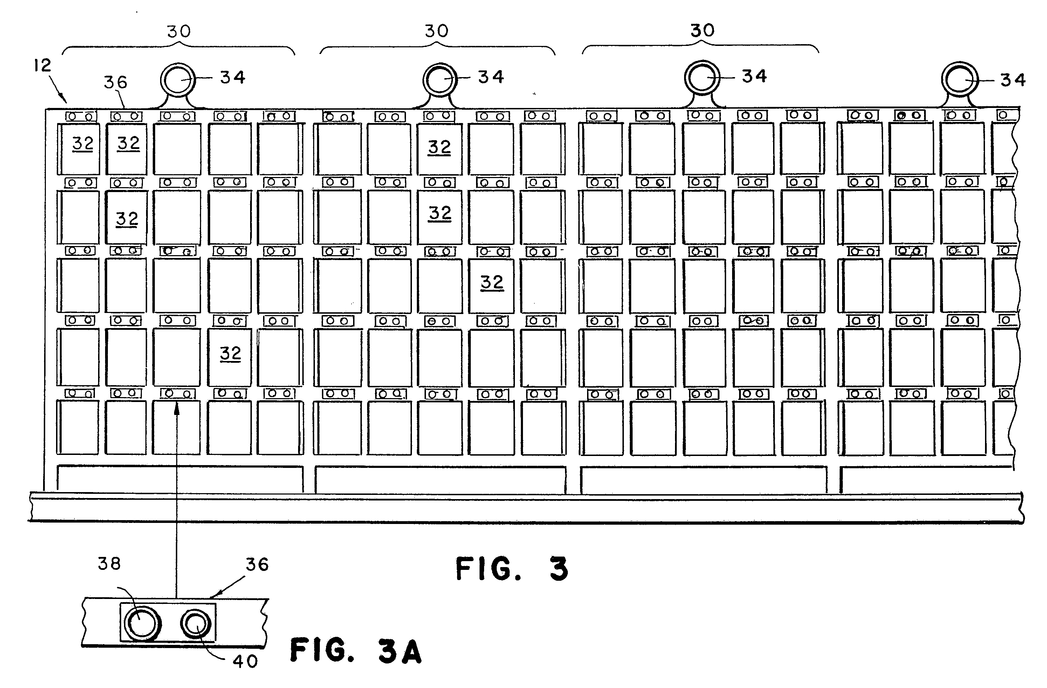

The storage racks or "flow racks" 12 (Figs. 2 and 3) are segmented into a plurality of bays 30 each of which in turn includes a plurality of bins or compartments 32. Each bin is open between the adjacent pick and replenishment aisles, enabling articles to be stocked into the bin from the replenishment aisle and retrieved from the bin from the pick aisle. Each bin 32 is assigned to a unique article type, such as Brand X combs, Brand Y toothpaste, or Brand Z toothpaste. Consequently, a definition to pick articles from a specific bin 32 uniquely identifies an article type.

Indicator lights are included in conjunction with each bay 30 and each bin 32. A "bay-active" light 34 is mounted on the top of each bay 30 and is illuminated as will be described to indicate that articles are to be retrieved or "picked" from at least one bin in the bay. Each bin 32 includes an information area 36 which in turn includes an indicator light 38 and a manually actuated acknowledgement button 40. The indicator light 38 is illuminated whenever articles in the associated bin are to be retrieved and placed in the carrier. The worker acknowledges that such items have been picked or retrieved by actuating the button 40.

The carrier conveyor system 14 (Figs. 2 and 4-5) includes an electrified beam or monorail 22 and a plurality of carriers 24. The construction of the monorail and units for propelling the carrier 24 are generally well known to those who have ordinary skill in the art and therefore will not be described in detail. Suffice it to say that the beam 22 is a "power-and-free" monorail from which the carriers 24 are suspended and powered to travel along a path located in front of the "pick face". Each carrier 24 includes a body 50 suspended on arms 52 which in turn are supported by trolley assemblies 54. The trolley assemblies 54 are secured within the beam 22 to travel therealong. The forward trolley 54a is powered to propel the carrier 24 with respect to the beam. The rear trolley 54b is typically unpowered.

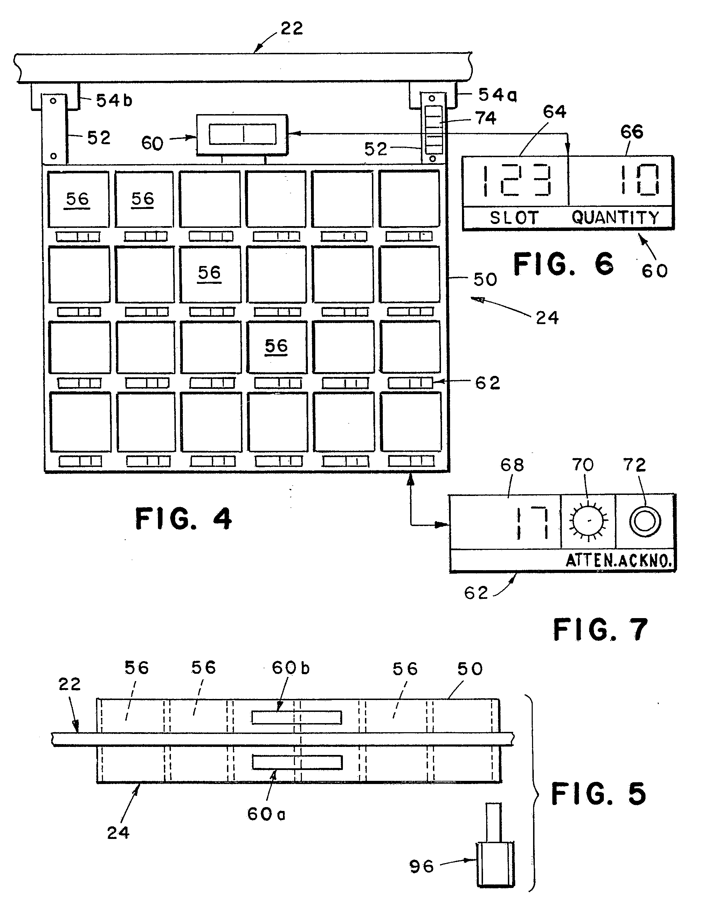

The carrier body 50 (Figs. 2 and 4) is segmented into 24 compartments or cells 56 each uniquely associated with an order or "packing list" internal to the central computer. Each cell 56 extends the full width of the carrier body 50. enabling retrieved articles to be placed into the cell from either side of the carrier. A carrier display 60 is mounted on the upper surface of each carrier body 50; and a cell display 62 is associated with each cell. As shown, the display 60 includes two separate displays 60a and 60b facing opposite directions but displaying the same information. The carrier display 60 (Fig. 6) includes a quantity number area 66 and also optionally includes a slot number area 64. The quantity of articles to be retrieved from a slot is displayed in area 66. The slot identification number within the associated bay 30 from which the articles are to be retrieved is displayed in area 64 if such an area is included.

The carrier cell display 62 (Fig. 7) includes a quantity number area 68, an attention light 70, and an acknowledgement button 72. Whenever retrieved articles are to be placed into a carrier cell, the associated display 72 is activated as will be described. Briefly, the attention light 70 is illuminated; and the required quantity of retrieved articles is displayed in area 68. After the required articles have been deposited in the tote, the worker depresses the acknowledgement button 72 to signal that the transfer function is complete.

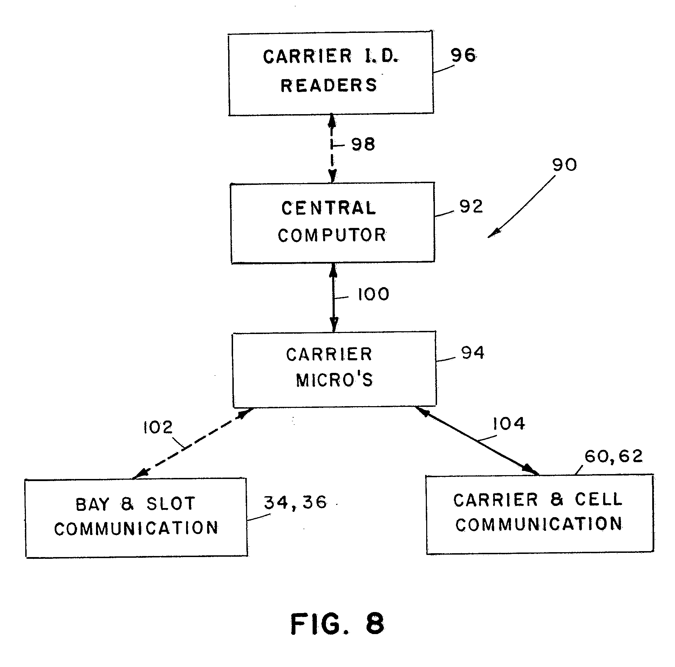

Each carrier 24 additionally includes an identification device 74 carried on the forward arm 52. The identification device uniquely identifies the carrier 24 to which it is attached and is machine readable by readers 96 (see Fig. 8) mounted on the storage racks 12.

The take-away or return conveyor 16 (Figs. 1 and 2) is a conventional belt conveyor or live roller conveyor for transporting filled totes to the shipping area (not shown). Such conveyors are generally well known to those having ordinary skill in the art and will not be further described in detail. The take-away conveyor parallels the path of the carrier conveyor system 14 so that filled totes can be easily removed at any time and placed on the take-away conveyor for transportation to the shipping area.

Preferably, an empty tote vehicle 80 (Fig. 2) is provided in conjunction with each carrier 24. The vehicle 80 includes a body 82 suspended on an arm 84 which in turn is carried by a trolley assembly 86. Empty totes 87 can be placed in the vehicle 80 to be available to replace filled totes in the carrier 24. Preferably, the vehicle 80 is physically coupled to the carrier 24 so that the vehicle 80 does not require a separate propulsion system. Optionally, empty totes can be distributed throughout the storage area 12 if the empty tote vehicle 80 is to be eliminated.

The control system 90 is illustrated in block diagram form in Fig. 8. the control system includes a central computer 92, a microcomputer 94 carried on each carrier, carrier ID readers 96, the bay and slot communication devices 34 and 36, and the carrier and cell communication devices 670 and 62. The central computer 92 is generally well known to those having ordinary skill in the art and in the preferred embodiment is that sold as Model PDP-11/73 by Digital Equipment Corporation of Maynard, Massachusetts. The central computer 92 provides overall supervision for all components within the storage and retrieval system 10. The central computer 92 contains all information regarding the location of the carriers 24 and the packing lists for each tote or cell within each carrier 24.

The central computer 92 (Fig. 8) periodically polls the carrier ID readers 96 via a communication link 98 to update information regarding the location of each carrier 24. The communication link 908 in the preferred embodiment is an FM transceiving system of conventional configuration. The individual carrier ID readers are mounted on the storage racks 12. In the preferred embodiment, one reader is provided for each bay 30 so that the location of each carrier can be determined to the nearest bay.

The central computer 92 (Fig. 8) also is capable of communicating with each microcomputer 94 on each carrier 24 via the communication bus 100. In the preferred embodiment, the bus 100 is carried by the beam 22 in conventional fashion. The micro 94 on each carrier is generally well known to those having ordinary skill in the art and, in the preferred embodiment is that sold as Model T6 by Burr-Brown of Sunnyvale, California. The central computer controls the propulsion or drive trolley 54a for the carrier 24 to control movement of the carrier along the beam 22. Additionally, each carrier micro 94 communicates with the bay and slot communication devices 34 and 36 and the carrier and cell communication devices 60 and 62 to provide an interface with workers in the storage area who physically retrieve articles as needed from the bins and place the retrieved articles in the carrier cells. The data link 102 between the micros and the bay and slot communication devices is a conventional FM transceiver system. while the data link 104 between the micros and the carrier and cell communication devices is hard wired.

Operation

The central computer 92 and the carrier micros 94 (Fig. 8) control movement of the carriers 24 through the system 10 and appropriately illuminate the informational displays to indicate pick origins and destinations. As each order is received, it is entered into the system 10. Specifically, the packing list associated with that order is inputted into the central computer 92. If the order-processing department (not shown) is also computerised, the order information can be directly transferred from the order department to the central computer 92.

Each order is assigned to a cell 56 in a carrier 24 so that each cell represents an order. An empty tote is loaded into each utilised carrier cell prior to dispatch of the carrier into the storage area. If the empty tote vehicle (Fig. 2) is utilised, it also is loaded with empty totes for subsequent use in the system as order totes are filled. Each carrier 24 is dispatched into the storage area when either all or part of the cells 56 therein have been assigned an order. Assignments can be made by a human operator or by the computer 92 in response to the order information. Upon dispatch, the carrier 24 is guided along a path by the power-and-free monorail 22 in front of the pick face of the storage racks 12.

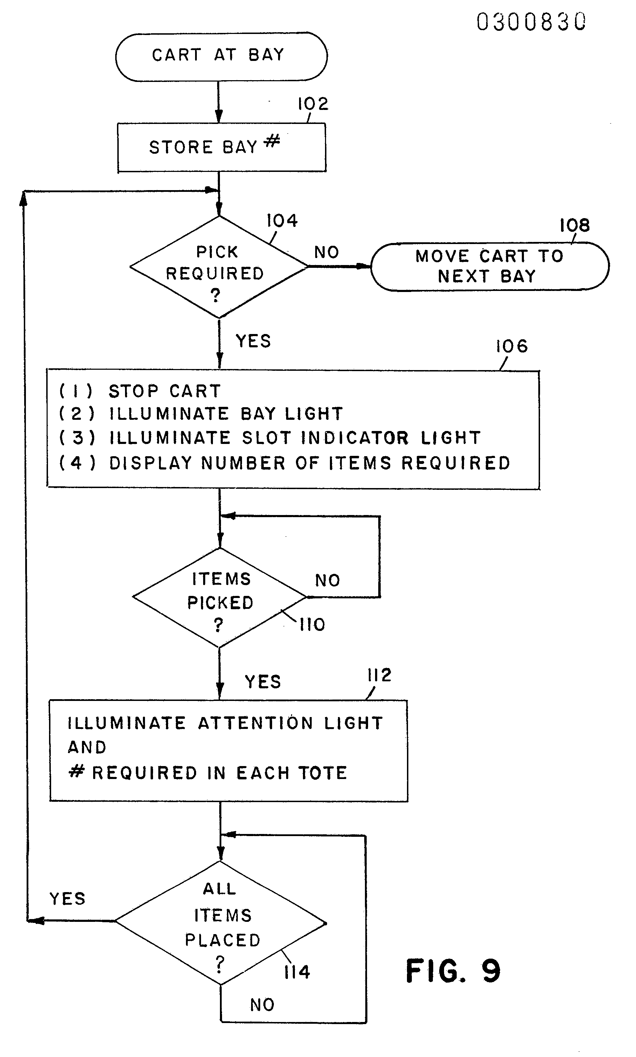

The flow chart of Fig. 9 illustrates the collective control function performed by the central computer 92 and the carrier micros 94 as each carrier 24 is newly sensed at a bay 30 by the reader 96 associated therewith. Program flow begins by storing (block 1020) the bay number associated with the cart. The central computer 92 then determines (block 1040) whether any picks are required at that bay. The computer makes this decision by consulting all of the packing lists for all of the totes carried by the carrier. If any articles are required from any bin within the bay by any of the totes, program flow passes to block 106. If no picks are required, the cart is moved (block 108) to the next bay.

If items are to be picked at the bay, the bay-active light 34 associated with the bay 30 is illuminated; and the carrier 24 is stopped. Additionally, the slot indicator light 38 (Fig. 3) directly above the slot from which articles are to be picked is illuminated. The slot number and quantity of articles to be selected from the slot are illustrated on the display 60 on top of the carrier 24 (Fig. 4). With this information, the worker can readily locate the appropriate slot in the bay and pick the required number of items. The worker then actuates the acknowledge button 40 (Fig. 3) to indicate that the articles have been retrieved from storage. The computer waits in a loop 110 for the acknowledge button to be depressed. Program flow then passes to block 112 wherein the attention light 70 and the quantity information 68 (Fig. 7) are illuminated for each cell 56 which is to receive any of the retrieved items. The worker then deposits the articles in the carrier 24 as indicated by the various displays 62. As each cell's requirements are satisfied, the worker depresses or actuates the acknowledgement button 72 (Fig. 7) to indicate that the required articles for that tote have been deposited. Program control waits in a loop 114 for the retrieved articles to be placed in totes. After all retrieved articles have been deposited, program flow returns to determination 1040. The computer then consults the packing lists associated with the carrier 24 to determine whether any other articles from that bay are required. If so, program flow passes to block 106 and the picking procedure is conducted again. If no further articles are required, the cart is started and moved (block 108) to the next bay.

The central computer 92 and the carrier micros 94 (Fig. 8) also copyright to prevent intercarrier collision. The processing capability of the central computer 92 and the carrier micros 94 can be distributed as desired to meet a particular application. It is envisioned that micros could also be mounted on the bays to distribute the processing in a different manner.

The present system 10 provides a totally paperless means of retrieving articles from a storage area. The system is particularly suited to the fulfilment of relatively low-volume, low-activity, high-mix orders, such as those encountered in conjunction with warehouses for chemists shops and/or convenience stores. The informational lights and other displays associated with the storage bays, the storage bins, the carriers, and the carrier cells greatly facilitate the accurate retrieval of articles from the storage system and deposit of those articles in the carrier devices. Therefore, picking errors are vastly reduced.

**Claims**

1. A system (10) for assisting workers in accurately retrieving articles from a storage area to fill individual orders, the system comprising: storage means (12) for storing the articles, the storage means including a plurality of storage areas (32) each corresponding to a product type, a carrier (24) including a plurality of carrier areas (56) each corresponding to an order to be filled, and motive means (54) for propelling the carrier through the storage means along a path proximate the storage areas, characterised by a storage area indicator means (36) included in each storage area for indicating when articles within the storage area are to be retrieved; a carrier area indicator means (62) included in each carrier are for indicating when articles are to be placed into the carrier area; , memory means for storing a list of articles to be placed in each carrier area, and control means (90) for controlling the storage area indicator means (36) and the carrier area indicator means (62), said control means being responsive to said memory means and including monitor means (74,96) for determining the relative location of the carrier with respect to the storage areas, the control means including means for activating each storage area indicator means (36) when the carrier is proximate the associated storage area and when product is required from the storage area by any one of the carrier areas, the control means further including means for activating said carrier area indicator means (62) associated with each carrier area requiring product from the storage area, whereby a worker is alerted to the requirement of article transfer and to the origination and destination of the transfer.

2. A system according to claim 1 which includes first display means (66) for displaying the number of articles to be transferred from the associated storage area and second display means (68) for displaying the number of articles to be transferred to each carrier area.

3. A system according to claim 1 or claim 2 in which each of the storage area indicator means (36) and each of the carrier cell indicator means (62) includes a manually actuated switch (40,42) to which said control means (90) is responsive, whereby a worker can indicate that a transfer function is complete by actuating the appropriate switch.

4. A system according to claim 3 in which the control means (90) includes means for delaying actuation of the second display means (68) until the switch (36) on said storage area indicator means has been actuated.

5. A system according to any of claims 1 to 4 which includes a tote within each of the carrier areas (56).

6. A system according to any of claims 1 to 5 which includes a return conveyor means (16) for delivering filled totes to a desired location.

7. A system according to any of claims 1 to 6 which includes a tote supply device (82) accompanying each carrier (50), the tote supply device including means for storing empty totes (87).

8. A system according to any of claims 1 to 7 in which the storage means (12) is arranged to define parallel aisles (18,20), and wherein the carrier path includes alternating aisles.

9. A computerized warehousing system comprising a storage area (12) including a plurality of storage locations (32), and a carrier (24) capable of travelling within the storage area, the carrier including a plurality of carrier cells (56), characterised by a storage location display (36) associated with each storage location, a carrier cell display (62) associated with each carrier cell, and control means (90) for controlling activation of the storage location display (36) and the carrier cell display (62), the control means including means (74,96) for determining the relative position of said carrier with respect to said storage locations, the control means activating the storage location displays (36) and the carrier cell displays (62) as the carrier (24) travels through the storage area (12) to designate material transfer originations and destinations.

10. A warehousing system according to claim 9 which includes means (66) for indicating the number of articles to be transferred from a storage location.

11. A warehousing system according to claim 9 or claim 10 in which each carrier cell display (62) includes means (68) for indicating the number of articles to be transferred into the associated carrier cell.

12. A warehousing system according to claim 9 or claim 10 or claim 11 in which each storage location display (36) and each carrier cell display (62) includes a manually actuated device (40,72) to which the said control means is responsive, enabling a worker to indicate to the control means (90) that an article transfer operation is complete.

13. A warehousing system according to claim 12 in which the control means (90) includes delay means for delaying actuation of said carrier cell displays until the acknowledge device (40) on the actuated storage location display is actuated.

14. A warehousing system according to any of claims 9 to 13 in which only one storage location display (36) is actuated for the carrier at any one time.

15. A computerized storage and retrieval system comprising: a storage area (12) including a plurality of bays (30), each of the bays including a plurality of bins (32) for storing a product type, and a conveyor system (22) traversing the storage area along a path, the conveyor system including a plurality of carriers (24) each having a plurality of compartments (56) each for receiving a tote, the conveyor system further including means (54) for moving each vehicle along the path, characterised by computer means (90) for controlling movement of the carriers (24) and for indicating the number of products to be transferred from the storage bins to the carrier compartments, the computer means including: memory means for storing a list of products to be loaded into each carrier compartment; location means (74,96) for determining the location of each carrier with respect to the storage bays; control means for stopping each carrier proximate each bay having a bin from which product is required by any compartment within the carrier; first indicator means (38) for indicating each storage bin from which product is required; second indicator means (62) for indicating the carrier compartments requiring the product; and acknowledgement means (40,72) for permitting a worker to signal that all required product from an indicated storage bin has been transferred to the indicated carrier compartments.

16. A system according to claim 15 in which the first indicator means (38) includes a display associated with each storage bin.

17. A system according to claim 15 or claim 16 in which the second indicator means (60) includes a display associated with each carrier compartment.

18. A system according to any of claims 15 to 17 which includes a number of display means (66) for displaying the quantity of product to be retrieved from each storage bin (32) from which product is required.

19. A system according to any of claims 15 to 18 in which the second indicator means (62) includes a number display means (68) for displaying the number of articles to be placed in each compartment requiring product.

20. A system according to any of claims 15 to 19 in which the computer means (90) further includes delay means for delaying actuation of the second indicator means until after the first indicator means and the associated acknowledge means have been actuated.

21. A system according to any of claims 15 to 20 which includes a return conveyor means (16) for conveying filled totes to a desired location.

22. A system according to any of claims 15 to 21 which includes a tote supply means (80) associated with each of the carriers (24) for storing empty totes (87) to be used in replacing filled totes removed from the associated carrier.

FIG. 1

FIG. 2

FIG. 3

FIG. 3A

FIG. 4

FIG. 6

FIG. 7

FIG. 5

```
┌─────────────────┐
│  CARRIER I.D.   │──── 96
│    READERS      │
└─────────────────┘
         ↕ ├─ 98
                              90
┌─────────────────┐
│    CENTRAL      │──── 92          ↙
│   COMPUTOR      │
└─────────────────┘
         ↕ ─ 100
┌─────────────────┐
│    CARRIER      │──── 94
│    MICRO'S      │
└─────────────────┘
    ↙ 102        ↘ 104
┌──────────────────┐    ┌──────────────────┐
│   BAY & SLOT     │    │  CARRIER & CELL  │── 60,62
│  COMMUNICATION   │── 34,36  │  COMMUNICATION   │
└──────────────────┘    └──────────────────┘
```

## FIG. 8

0300830

CART AT BAY

STORE BAY # — 102

PICK REQUIRED ? — 104

NO → MOVE CART TO NEXT BAY — 108

YES

(1) STOP CART
(2) ILLUMINATE BAY LIGHT
(3) ILLUMINATE SLOT INDICATOR LIGHT
(4) DISPLAY NUMBER OF ITEMS REQUIRED — 106

ITEMS PICKED ? — 110

NO

YES

ILLUMINATE ATTENTION LIGHT
AND
# REQUIRED IN EACH TOTE — 112

ALL ITEMS PLACED ? — 114

YES

NO

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 908 800 (R.E. DRAPEAU) * Column 3, line 56 - column 6, line 23; figures * | 1,9 | B 65 G 1/137 |
| A | | 3,4,10, 15 | |
| Y | EP-A-0 210 438 (INTERROLL FÖRDERTECHNIK GmbH & CO.) * Claims 1-10; figures * | 1,9 | |
| A | | 2,5,6, 10,15 | |
| A | US-A-4 088 237 (W.L. BROWN) * Column 2, line 3 - column 5, line 57; figures * | 1,2,3, 10 | |
| A | US-A-4 346 453 (R.E. DRAPEAU) * Whole document * | 1,2 | |
| A | FR-A-1 582 646 (LA REDOUTE) * Page 1, line 36 - page 2, line 39; figures * | 8,21 | TECHNICAL FIELDS SEARCHED (Int. Cl.4) |
| A | DE-U-8 618 894 (PROLOGISTIK GESELLSCHAFT FÜR INFORMATIONS- UND STEUERUNGSSYSTEME mbH) * Page 6, line 1 - page 8, line 19; figure * | 1,5,6, 21 | B 65 G G 06 F |
| A | PATENT ABSTRACTS OF JAPAN, vol. 7, no. 179 (M-234)[1324], 9th August 1983; & JP-A-58 82 913 (TOYOTA JIDOSHA KOGYO K.K.) 18-05-1983 | 1,2 | |

The present search report has been drawn up for all claims

| Place of search | Date of completion of the search | Examiner |
|---|---|---|
| THE HAGUE | 28-10-1988 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document